# EUROPÄISCHE PATENTSCHRIFT

(11) **EP 1 637 370 B1**
(45) Veröffentlichungstag und Bekanntmachung des Hinweises auf die Patenterteilung: **05.11.2008**
(21) Anmeldenummer: 05016192.6
(22) Anmeldetag: 26.07.2005
(51) Int. Cl.: B60H 1/00, F16L 47/18

(54) **Verbindung zweierluftführender Bauteile eines Belüftungssystems, insbesondere eines Kraftfahrzeug-Belüftungssystems**
Connection of two air conveying parts of a ventilation system, in particular of a vehicle ventilation system
Connection entre deux composants de transport d'air d'un système de ventilation, en particulier d'un système de ventilation de véhicule

(30) Priorität: 21.09.2004 DE 102004046058
(43) Veröffentlichungstag der Anmeldung: 22.03.2006
(73) Patentinhaber: Behr GmbH & Co. KG, 70469 Stuttgart (DE)
(72) Erfinder: Drake, Alexander, Willian Letchworth Herts SG6 2UD (GB); Knoche, Volker, 40789 Monheim (DE); Simon, Lubens, Dr., 70499 Stuttgart (DE)

(56) Entgegenhaltungen:
- EP-A- 1 493 600
- JP-A- 9 300 944
- JP-A- 2002 019 452
- JP-A- 2002 144 846
- JP-A- 2003 285 622
- US-A- 4 840 115

## Beschreibung

Die Erfindung betrifft eine Verbindung zweier luftführender Bauteile eines Belüftungssystems gemäß dem Oberbegriff des Anspruchs 1 sowie eine Heizungs- oder Klimaanlage mit einer solchen Verbindung.

Bei einem Kraftfahrzeug-Belüftungssystem, auch Heizungs- oder Klimaanlage, wird die Luftführungseinheit, wie im folgenden AHU (air handling unit) genannt, üblicherweise an blasgeformte Kunststoff-Luftkanäle angeschlossen. Der Luftkanal wird hierfür mittels einer Aufweitung über einen entsprechend ausgebildeten Stutzen der AHU geschoben. Zur Sicherung und Fixierung der Verbindung dient in der Regel eine Schiebemuffe. Eine Montage oder Demontage ist nur in Längsrichtung des Kanals möglich. Auf Grund der beengten Platzverhältnisse ist die Montage und Demontage schwierig.

Die US 4840115 sowie die JP 2002 019452 offenbaren jeweils eine Verbindung von zwei Luftkanälen.

Diese Aufgabe wird gelöst durch eine Verbindung mit den Merkmalen des Anspruchs 1. Vorteilhafte Ausgestaltungen sind Gegenstand der Unteransprüche.

Erfindungsgemäß ist eine Verbindung zweier luftführender Bauteile eines Belüftungssystems, insbesondere eines Kraftfahrzeug-Belüftungssystems, vorgesehen, die sich in einem Verbindungsbereich überlappen, wobei beide Bauteile im Verbindungsbereich einen etwa mittig angeordneten Bereich mit vergrößertem Querschnitt aufweisen. Im Überlappungsbereich stellt ein langer, enger Spalt sicher, dass keine Luft austritt. Dabei zeigt insbesondere auch das Ende des inneren Bauteils in Luftströmungsrichtung. Der vergrößerte Querschnitt ermöglicht eine ausreichende Befestigung der beiden Bauteile aneinander ohne weitere Hilfsmittel, wie eine Schiebemuffe oder ähnliches.

Die Querschnittsveränderung ist vorzugsweise in einer Richtung quer zur Längsachse der Bauteile vorgesehen, wobei die Querschnittsveränderung spiegelbildlich bezüglich der entlang der Längsachse verlaufenden Mittelebene, die senkrecht zum Richtung der Querschnittsveränderung verläuft, ist. Jedoch ist auch eine Querschnittsveränderung in beiden Richtungen quer zur Längsachse der Bauteile möglich. Die Querschnittsveränderung jedes Bauteils verläuft bevorzugt in einem Radius, wobei vorzugsweise der Mittelpunkt der Radien auf den Längsachsen der Bauteile liegt.

Ist eine Querschnittsveränderung in beiden Richtungen quer zur Längsachse der Bauteile vorgesehen, so sind bevorzugt alle Radien eines jeden Bauteils gleich und haben alle den gleichen Krümmungsmittelpunkt, der auf der Längsachse der beiden Bauteile liegt.

Um das Verbinden zu vereinfachen, ist bevorzugt das Ende des im Verbindungsbereich außen angeordneten Bauteils, wobei es sich vorzugsweise um einen Luftkanal handelt, der auf eine AHU aufgeschoben wird, nach außen aufgeweitet. Das im Verbindungsbereich innen angeordnete Bauteil endet sich zumindest in einer Richtung quer zur Längsachse des Bauteils verjüngend, was das einfache Einführen unterstützt.

Der Querschnitt am Ende des im Verbindungsbereich innen angeordneten Bauteils entspricht vorzugsweise etwa dem Querschnitt des Bauteils vor dem Verbindungsbereich, so dass keine wesentliche Beeinflussung des Strömungsverlaufs der Luft erfolgt.

Das im Verbindungsbereich innen angeordnete Bauteil weist vorzugsweise bauteilseitig des Verbindungsbereichs einen Bereich mit einem verkleinerten Querschnitt auf. Dieser Bereich ermöglicht eine Vergrößerung des maximalen Schwenkwinkels und unterstützt somit eine schräge Montage.

Die Verbindung ist bevorzugt derart ausgebildet, dass eine Schwenkbewegung ermöglicht ist, d.h. sie bildet gleichzeitig eine Art Gelenk, welches anwendungsbestimmungsgemäß nur einen begrenzten Schwenkbereich hat. Der Schwenkwinkel beträgt bei einem Ausführungsbeispiel vorzugsweise maximal 20°, insbesondere maximal 10°. Dieser Winkel reicht in der Regel aus, um ein einfaches Einführen zu gewährleisten und stellt sicher, dass die sich ändernden Innenabmessungen des Luftkanals die Luftströmung nicht oder nur unwesentlich beeinflussen.

Die Verbindung weist bevorzugt eine Rastvorrichtung auf, die sicherstellt, dass sich die Verbindung im normalen Betrieb nicht löst. Dabei wird die Rastvorrichtung insbesondere durch die sich überlappenden Verbindungsbereiche und deren Querschnittsänderung, die verbunden ist mit einem Hinterschnitt, gebildet.

Durch eine derartige Ausgestaltung der Verbindung ist ein einfaches Verbinden und Lösen möglich. Ferner sind keine zusätzlichen Verbindungselemente, wie Schrauben oder ähnliches, erforderlich, sondern die Verbindung wird bereits durch einfaches Zusammenschieben ausreichend fixiert. Dabei hat die Verbindung bevorzugt einen oder zwei Freiheitsgrade, nämlich es ist ein Schwenken um eine oder zwei senkrecht zur Längsachse und senkrecht zueinander angeordnete Schwenkachsen möglich, wobei der Schwenkwinkel begrenzt ist.

Die Herstellung derartige ausgebildeter AHUs kann in einem konventionellen Kunststoff-Spritzwerkzeug gegebenenfalls ohne Schieber zur Entformung hergestellt werden. Der Luftkanal kann mit einem Blasformwarkzeug hergestellt werden, das keine Hinterschnitte hat, die das Ausformen verhindern oder zusätzliche Werkzeugteilungen erfordern würden.

Im Folgenden wird die Erfindung anhand zweier Ausführungsbeispiele unter Bezugnahme auf die Zeichnung im Einzelnen erläutert. In der Zeichnung zeigen:
- Fig. 1: einen Längsschnitt durch eine Verbindung gemäß dem ersten Ausführungsbeispiel im gerade ausgerichteten Zustand,
- Fig. 2: einen Längsschnitt durch die Verbindung von Fig. 1 in einem maximal abgewinkelten Zustand (Demontageposition),

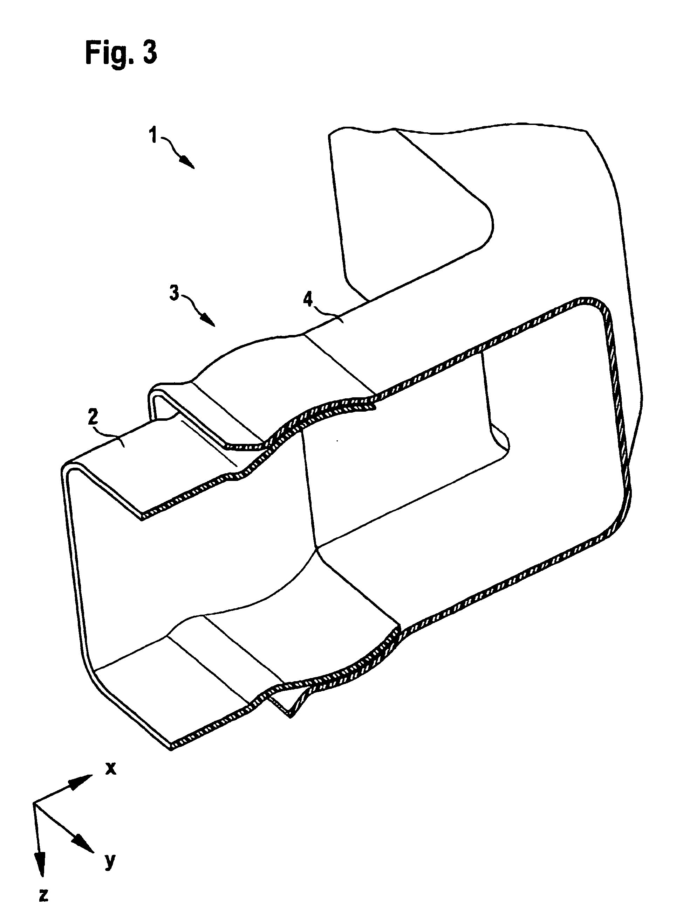

- Fig. 3: eine geschnittene Darstellung einer perspektivischen Ansicht der Verbindung von Fig. 1,

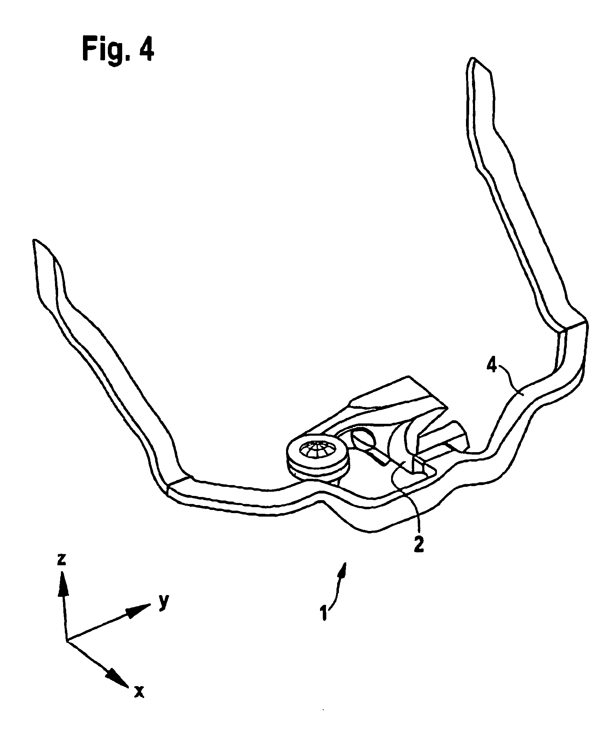

- Fig. 4: eine perspektivische Ansicht einer Klimaanlage von halb links hinten hinter dem Fahrzeug stehend mit einer Verbindung gemäß dem zweiten Ausführungsbeispiel,

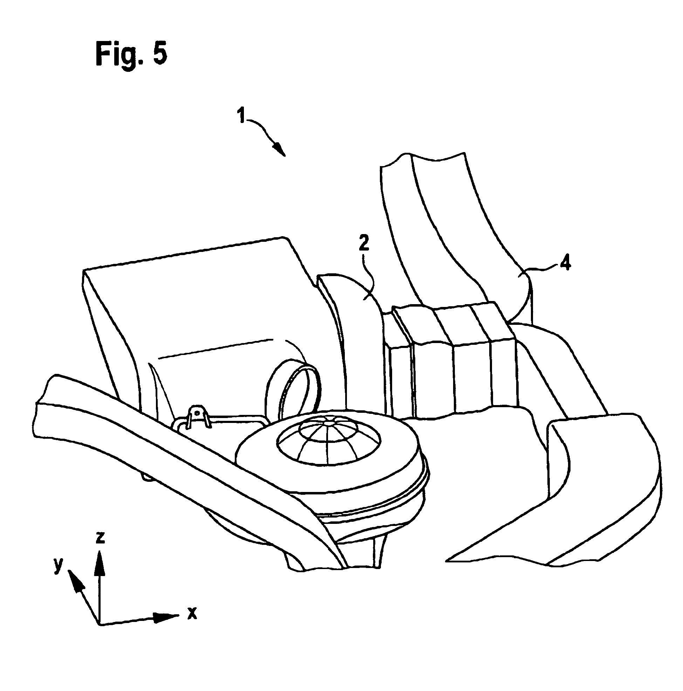

- Fig. 5: einen vergrößerten Ausschnitt von Fig. 4,
- Fig. 6: eine Detailansicht von Fig. 5, und
- Fig. 7: eine geschnittene perspektivische Ansicht einer Verbindung gemäß Fig. 6.

Ein Kraftfahrzeug-Belüftungssystem 1 weist eine als Kunststoff-Spritzgussteil ausgebildete AHU 2 auf, an welche mittels einer erfindungsgemäßen Verbindung 3 ein Luftkanal 4 angeschlossen ist. Der Luftkanal 4, der aus Kunststoff besteht und blasgeformt ist, kann seinerseits mehrteilig ausgebildet sein, wobei die einzelnen Teile mit entsprechenden Verbindungen miteinander verbunden sein können, ebenso ist eine entsprechende Anbringung von Ausströmern möglich.

Der Verbindungsbereich 5 des Luftkanals 4, wie auch der entsprechende Verbindungsbereich 6 der AHU 2, an dem der Luftkanal 4 angebracht ist, weisen einen etwa rechteckförmigen Querschnitt auf, wobei die Ecken abgerundet ausgebildet sind. Der Verbindungsbereich 5 des Luftkanals 4 ist mit seinem AHU-seitigen Ende auf den Verbindungsbereich 6 der AHU 2 aufgeschoben, weshalb die Innenabmessungen des Luftkanal-Verbindungsbereichs 5 etwa den Außenabmessungen des AHU-Verbindungsbereichs 6 entsprechen, so dass auf Grund der Spaltbreite zwischen den beiden Bauteilen ohne weitere Maßnahmen eine gute Abdichtung erfolgt und keine Luft austritt.

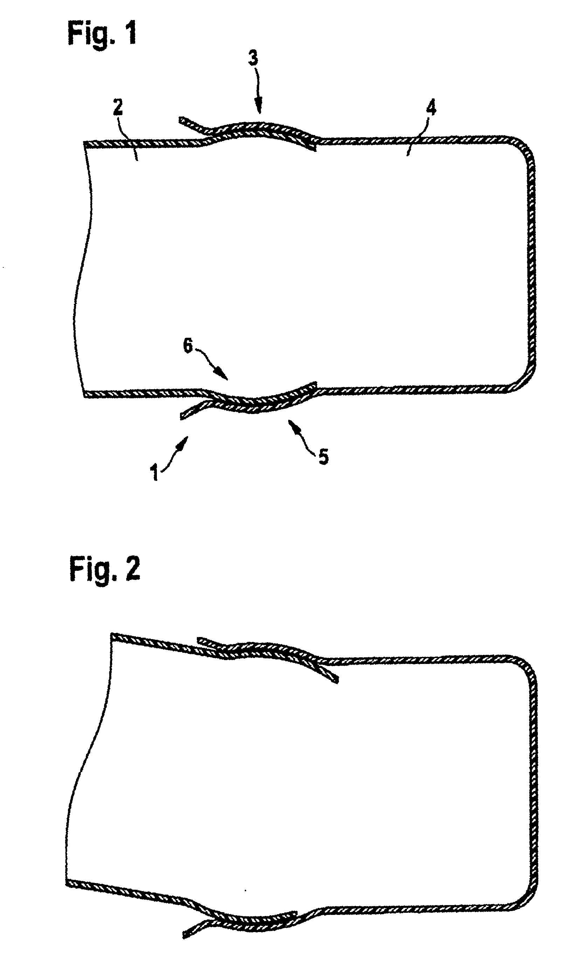

Die Verbindungsbereiche 5 und 6 sind jeweils auf zwei einander gegenüberliegenden Seiten der AHU 2 bzw. des Luftkanals 4, wie insbesondere aus Fig. 1 ersichtlich, in einer Richtung quer zur Längsachse (in der Zeichnung parallel zur X-Achse) der beiden Bauteile teil-zylindrisch ausgebildet, wobei die Achse der beiden konzentrisch angeordneten Zylinder (in der Zeichnung parallel zur Y-Achse) die Längsachse der beiden Bauteile schneidet. Der Verlauf der beiden anderen Seiten der AHU 2 und des Luftkanals 4 ist - abgesehen von den Kantenbereichen - unverändert.

Um einen vergrößerten Schwenkwinkel zu ermöglichen, ist der Querschnitt des innenliegenden Bauteils, also vorliegend der AHU 2. AHU-seitig des Verbindungsbereichs 6 benachbart etwas verkleinert (siehe z.B. Fig. 2), während das Ende des außenliegenden Bauteils, also vorliegend des Luftkanals 4, sich erweitert. Dabei sind die Verläufe der Querschnittsveränderungen etwa aufeinander abgestimmt, wie insbesondere in Fig. 2 oben ersichtlich ist. Das Ende des Verbindungsbereichs 6 der AHU 2 wird direkt durch das Ende des teil-zylindrischen Bereichs gebildet, wobei der Querschnitt etwa dem Querschnitt AHU-seitig vor dem Verbindungsbereich 6 entspricht. Beim Luftkanal ist lediglich ein abgerundeter Übergang vom teil-zylindrischen Bereich zum weiteren Verlauf des Luftkanals 4 vorgesehen.

Durch die teil-rylindrischen Bereiche ist im verbundenen Zustand der beiden Bauteile eine Schwenkbewegung um die gemeinsame Zylinderachse möglich (ein Freiheitsgrad), so dass die Montage und Demontage erleichtert wind, da das Einführen oder Auseinanderziehen nicht notwendigerweise exakt in X-Richtung erfolgen muss, so dass auch bei beengten Verhältnissen eine relativ einfache Montage oder Demontage möglich ist.

Die beiden teil-zylindrischen Bereiche dienen neben der schwenkbaren Verbindung der beiden Bauteile auch gleichzeitig durch die Hinterschneidung in Folge der Querschnittsänderung als eine Art Rastvorrichtung 7, welche eine ausreichend sichere Fixierung des Luftkanals 4 an der AHU 2. Dabei ist die Querschnittsänderung zudem so bemessen, dass eine Montage oder Demontage bei elastischer Verformung, insbesondere des Luftkanals 4, ohne einer Beschädigung desselben oder eines Zurückbleibens einer bleibenden Verformung möglich ist. Um die elastische Verformbarkeit des Luftkanals 4 zu erhöhen, so dass der Kraftaufwand zum Verbinden oder Lösen der Verbindung nicht zu groß wird, können beispielsweise auch Schlitze, insbesondere in Längsrichtung verlaufend, vorgesehen sein, gegebenenfalls auch an der AHU 2 oder in beiden Verbindungsbereichen 5 und 6. Ebenso ist eine dünnere Ausgestaltung des Verbindungsbereichs 6 des Luftkanals 4 möglich, wodurch die zum Verbinden ertorderliche Kraft ebenfalls verringert wird. In allen Fällen ist aber eine ausreichende Spannkraft des äußeren Bauteils zu gewährleisten, dass die Verbindung 3 den zu erwartenden Belastungen standhält.

Gemäß dem zweiten Ausführungsbeispiel ist der Querschnitt etwa quadratisch ausgebildet und sind beide Bauteile - entgegen dem ersten Ausführungsbeispiel - auf allen vier Seiten mit teil-zylindrischen Bereichen versehen, wobei alle Zylinderachsen (in der Zeichnung parallel zur Y- bzw. zur Z-Achse) die Längsachse (in der Zeichnung parallel zur X-Achse) der AHU 2 im gleichen Punkt schneiden. Ferner haben die beiden Teilzylinder jedes Bauteils einen einander entsprechenden Durchmesser, wobei der Außendurchmesser des Verbindungsbereichs 6 der AHU 2 etwa dem Innendurchmesser des entsprechenden Verbindungsbereichs 5 des Luftkanals 4 entspricht.

Eine derartige Ausgestaltung ergibt zwei Freiheitsgrade, so dass die Montage und Demontage weiter erleichtert wird, da bei der Montage die Längsachsen der beiden Bauteile nicht notwendigerweise in einer Linie angeordnet sein müssen, sondern auch ein schräges Ansetzen und Einschieben möglich ist.

Ebenso wie beim ersten Ausführungsbeispiel ist keine spezielle Fixiervorrichtung erforderlich, das durch den eine Art Rastvorrichtung bildenden Hinterschnitt im Verbindungsbereich 5 und 6 eine ausreichend sichere Fixierung gewährleistet ist.

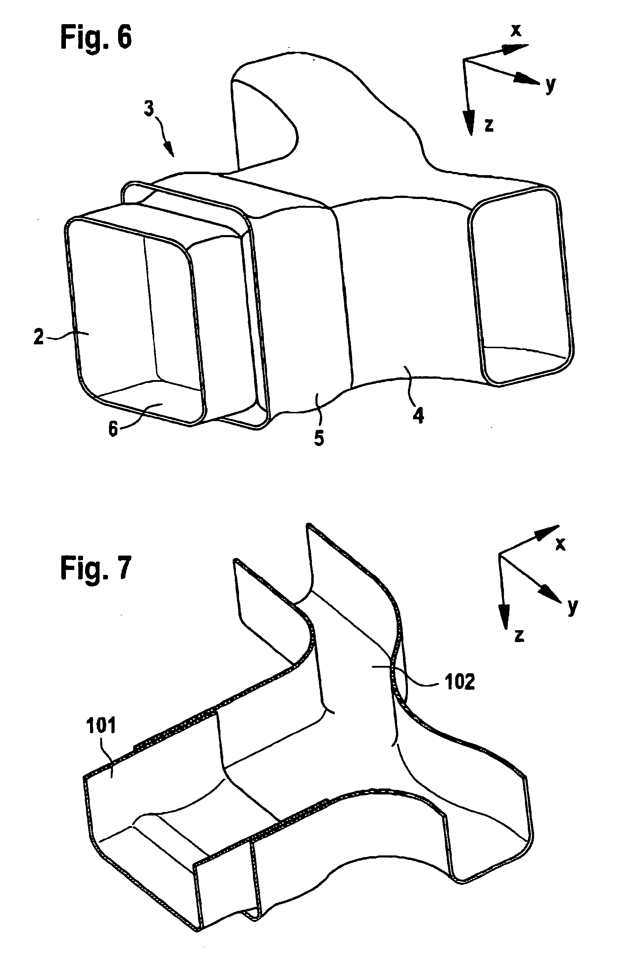

Ein Schnitt durch die Figur 6 ist in Figur 7 zu erkennen, wobei die AHU mit 101 und der Luftkanal, der sich verzweigt, mit 102 bezeichnet ist. Die Schiebemuffe ist nicht dargestellt.

Bevorzugt sind erfindungsgemäße Verbindungselemente in Belüftungs-, Heizungs- oder Klimaanlage vorgesehen, die mit zumindest einem Gebläse, zumindest einem Luftstromsteuerelement und gegebenenfalls zumindest einem Wärmetauscher ausgestattet sind, wobei zur Verbindung zumindest zweier luftführender Bauteile der Anlage eine Verbindung gemäß dem oben beschriebenen verwendet wird. Heizungsanlegen weisen dabei als Wärmetauscher zumindest einen Heizkörper auf. Klimaanlagen weisen neben zumindest einem Heizkörper weiterhin zumindest einen Wärmetauscher zum Kühlen von Luft, wie einen Verdampfer, auf.

### Bezugszeichenliste

- 1: Kraftfahrzeug-Belüftungssystem
- 2: AHU
- 3: Verbindung
- 4: Luftkanal
- 5: Verbindungsbereich Luftkanal
- 6: Verbindungsbereich AHU

- 101: AHU
- 102: Luftkanal

## Patentansprüche

1. Verbindung (3) zweier luftführender Bauteile eines Belüftungssystems, insbesondere eines Kraftfahrzeug-Belüftungssystems, die sich in einem Verbindungsbereich (5, 6) überlappen, wobei beide Bauteile im Verbindungsbereich (5, 6) einen etwa mittig angeordneten Bereich mit vergrößertem Querschnitt aufweisen, wobei die Querschnittsveränderung in einem Radius verläuft und der Mittelpunkt des Radius auf der Längsachse der Bauteile liegt, wobei die Verbindung (3) eine Schwenkbewegung ermöglicht, **dadurch gekennzeichnet, dass** das Ende des im Verbindungsbereich außen angeordneten Bauteils nach außen aufgeweitet ist oder das im Verbindungsbereich (5, 6) innen angeordnete Bauteil sich zumindest in einer Richtung quer zur Längsachse des Bauteils verjüngend endet, wobei der Querschnitt am Ende des im Verbindungsbereich (5, 6) innen angeordneten Bauteils etwa dem Querschnitt des Bauteils vor dem Verbindungsbereich entspricht.

2. Verbindung (3) nach Anspruch 1, **dadurch gekennzeichnet, dass** die Querschnittsveränderung in mindestens einer Richtung quer zur Längsachse der Bauteile vorgesehen ist, wobei sie spiegelbildlich bezüglich der entlang der Längsachse verlaufenden Mittelebene, die senkrecht zum Richtung der Querschnittsveränderung verläuft, ist.

3. Verbindung (3) nach einem der vorhergehenden Ansprüche, **dadurch gekennzeichnet, dass** das im Verbindungsbereich (5, 6) innen angeordnete Bauteil bauteilseitig des Verbindungsbereichs (5, 6) einen Bereich mit einem verkleinerten Querschnitt aufweist.

4. Verbindung (3) nach zumindest einem der vorhergehenden Ansprüche, **dadurch gekennzeichnet, dass** die Schwenkbewegung auf einen Schwenkwinkel von maximal 20°, insbesondere von maximal 10°, beschränkt ist.

5. Verbindung (3) nach einem der vorhergehenden Ansprüche, **dadurch gekennzeichnet, dass** die Verbindung (3) eine Rastvorrichtung aufweist.

6. Verbindung (3) nach einem der vorhergehenden Ansprüche, **dadurch gekennzeichnet, dass** mindestens ein Bauteil aus Kunststoff besteht.

7. Belüftungs-, Heizungs- oder Klimaanlage mit zumindest einem Gebläse, zumindest einem Luftstromsteuerelement und gegebenenfalls zumindest einem Wärmetauscher, **dadurch gekennzeichnet, dass** zur Verbindung zumindest zweier luftführender Bauteile der Anlage eine Verbindung (3) gemäß zumindest einem der vorhergehenden Ansprüche 1 bis 6 verwendbar ist,

8. Kraftfahrzeug-Belüftungssystem, **gekennzeichnet durch** mindestens eine Verbindung (3) gemäß einem der Ansprüche 1 bis 6.

## Claims

1. Connection (3) of two air conveying parts of a ventilation system, in particular of a motor vehicle ventilation system, which overlap in a connecting region (5, 6), wherein both parts comprise an approximately centrally located region with an increased cross-section in the connecting region (5, 6), wherein the cross-sectional change extends in a radius and the centre point of the radius lies on the longitudinal axis of the parts and wherein the connection (3) permits a pivoting movement, **characterised in that** the end of the part which is located outside in the connecting region is flared towards the outside or the part which is located inside in the connecting region (5, 6) tapers at the end in at least one direction at right angles to the longitudinal axis of the part, the cross-section at the end of the part which is located inside in the connecting region (5, 6) approximately corresponding to the cross-section of the part upstream of the connecting region.

2. Connection (3) according to claim 1, **characterised in that** the cross-sectional change is provided in at least one direction at right angles to the longitudinal axis of the parts, being mirror-symznetrical relative to the central plane extending along the longitudinal axis and at right angles to the direction of the cross-sectional change.

3. Connection (3) according to any of the preceding claims, **characterised in that** the part which is located inside in the connecting region (5, 6) includes a region with a reduced cross-section on the part side of the connecting region (5, 6).

4. Connection (3) according to any of the preceding claims, **characterised in that** the pivoting movement is limited to a maximum angle of 20°, in particular to a maximum angle of 10°.

5. Connection (3) according to any of the preceding claims, **characterised in that** the connection (3) comprises a locking device.

6. Connection (3) according to any of the preceding claims, **characterised in that** at least one part is made of a plastic material.

7. Ventilation, heating or air conditioning system with at least one fan, at least one airflow control element and at least one heat exchanger if fitted, **characterised in that** a connection (3) according to one or more of the preceding claims 1 to 6 can be used to connect at least two air conveying parts of the system.

8. Motor vehicle ventilation system, **characterised by** at least one connection (3) according to any of claims 1 to 6.

## Revendications

1. Assemblage (3) de deux pièces de passage d'air d'un système de ventilation, en particulier d'un système de ventilation d'un véhicule automobile, pièces qui se chevauchent dans une zone d'assemblage (5, 6), où les deux pièces, dans la zone d'assemblage (5, 6), présentent une zone disposée à peu près au milieu et ayant une plus grande section, où la modification de la section s'étend dans un rayon et le centre du rayon se trouve sur l'axe longitudinal des pièces, l'assemblage (3) permettant un mouvement de pivotement,
**caractérisé en ce que** l'extrémité de la pièce disposée à l'extérieur, dans la zone d'assemblage, est élargie vers l'extérieur, ou bien la pièce disposée à l'intérieur, dans la zone d'assemblage (5, 6), se termine en se rétrécissant au moins dans une direction transversale par rapport à l'axe longitudinal de la pièce, où la section à la fin de la pièce disposée à l'intérieur, dans la zone d'assemblage (5, 6), correspond à peu près à la section de la pièce en amont de la zone d'assemblage.

2. Assemblage (3) selon la revendication 1, **caractérisé en ce que** la modification de la section est prévue dans un moins une direction transversale par rapport à l'axe longitudinal des pièces, où ladite modification de la section est symétrique par rapport au plan médian s'étendant le long de l'axe longitudinal, plan médian qui s'étend perpendiculairement à la direction de la modification de la section.

3. Assemblage (3) selon l'une ou l'autre des revendications précédentes, **caractérisé en ce que** la pièce disposée à l'intérieur, dans la zone d'assemblage (5, 6), présente, côté pièce de la zone d'assemblage (5, 6), une zone ayant une section plus petite.

4. Assemblage (3) selon au moins l'une quelconque revendications précédentes, **caractérisé en ce que** le mouvement de pivotement est limité à un angle de pivotement au maximum de 20°, en particulier au maximum de 10°.

5. Assemblage (3) selon l'une quelconque revendications précédentes, **caractérisé en ce que** l'assemblage (3) présente un dispositif d'encliquetage.

6. Assemblage (3) selon l'une quelconque revendications précédentes, **caractérisé en ce qu'**au moins une pièce est en matière plastique.

7. Système de ventilation, de chauffage ou de climatisation comprenant au moins un ventilateur, au moins un élément de commande de flux d'air et, le cas échéant, au moins un échangeur de chaleur, **caractérisé en ce que,** pour l'assemblage d'au moins deux pièces de passage d'air du système, on peut utiliser un assemblage (3) conformément à au moins l'une quelconque des revendications précédentes 1 à 6.

8. Système de ventilation d'un véhicule automobile, **caractérisé par** au moins un assemblage (3) conformément à l'une quelconque des revendications 1 à 6.
